# EUROPÄISCHE PATENTSCHRIFT

(11) **EP 2 607 918 B1**
(45) Veröffentlichungstag und Bekanntmachung des Hinweises auf die Patenterteilung: **19.04.2017**
(21) Anmeldenummer: 12193520.9
(22) Anmeldetag: 21.11.2012
(51) Int. Cl.: G01S 7/481, G01S 7/497, G01S 17/08

(54) **Messeinrichtung zur Messung einer Distanz zu einem Zielobjekt**
Measuring device for measuring a distance to a target object
Dispositif de mesure d'une distance par rapport à un objet cible

(30) Priorität: 23.12.2011 DE 102011089866
(43) Veröffentlichungstag der Anmeldung: 26.06.2013
(73) Patentinhaber: HILTI Aktiengesellschaft, 9494 Schaan (LI)
(72) Erfinder: Dang, Lieu-Kim, 9473 Gams (CH)
(74) Vertreter: Hilti Aktiengesellschaft Corporate Intellectual Property

(56) Entgegenhaltungen:
- DE-A1- 10 147 987
- US-A1- 2007 205 285
- US-A1- 2010 271 614
- US-B1- 6 411 370

## Beschreibung

### Technisches Gebiet

Die vorliegende Erfindung betrifft eine Messeinrichtung zur Messung einer Distanz zu einem Zielobjekt gemäß dem Oberbegriff des Anspruchs 1.

### Stand der Technik

Messeinrichtungen zur Messung einer Distanz zu einem Zielobjekt bestehen aus einer als Strahlquelle ausgebildeten elektro-optischen Komponente, einer als Detektor ausgebildeten weiteren elektro-optischen Komponente und einem Strahlformungssystem mit einer Sendeoptik und einer Empfangsoptik. Die Strahlquelle und die Sendeoptik werden als Sendeeinrichtung und der Detektor und die Empfangsoptik als Empfangseinrichtung bezeichnet. Die Strahlquelle sendet einen Sendestrahl aus, der von der Sendeoptik auf das Zielobjekt gerichtet wird. Ein vom Zielobjekt reflektierter und/oder gestreuter Empfangsstrahl wird von der Empfangsoptik geformt und auf den Detektor gerichtet. Die Sende- und Empfangseinrichtungen werden an einem Optikträger befestigt, der ein- oder mehrteilig ausgebildet ist. Der Optikträger kann beispielsweise als metallischer Körper mit Halterungen aus Kunststoff ausgebildet sein. Nachteilig ist, dass sämtliche Komponenten der Messeinrichtung aufwändig zueinander justiert und in der justierten Position fixiert werden müssen. Unterschiedliche Materialien des optischen Komponenten und des Optikträgers können unter Temperatureinwirkung zu einer Dejustage führen.

Messeinrichtungen werden in para-axiale Anordnungen, bei denen die optischen Achsen der Sende- und Empfangseinrichtungen parallel versetzt verlaufen, und koaxiale Anordnungen, bei denen die optischen Achsen der Sende- und Empfangseinrichtungen übereinander liegen und mit Hilfe einer Strahlteilungsoptik getrennt werden, unterteilt. Bei koaxialen Anordnungen sind die Sendeoptik und die Empfangsoptik in eine gemeinsame Strahlformungsoptik, die den Laserstrahl und den Empfangsstrahl formt, integriert.

Aus DE 101 47 987 A1 ist eine Messeinrichtung für Geschwindigkeits-und Richtungsmessungen zu einem Zielobjekt bekannt. Die Messeinrichtung umfasst eine Strahlquelle, einen Detektor, eine Strahlteilungsoptik, eine Strahlformungsoptik und einen Optikträger. Der Optikträger umfasst einen ersten Wafer zur Aufnahme der elektro-optischen Komponenten (Strahlquelle und Detektor) und einen zweiten Wafer zur Aufnahme der Strahlteilungsoptik.

### Darstellung der Erfindung

Die Aufgabe der vorliegenden Erfindung besteht demgegenüber darin, eine Messeinrichtung zur Messung einer Distanz zu einem Zielobjekt dahingehend weiter zu entwickeln, dass der Aufwand zur Herstellung einer kleinen, kompakten Messeinrichtung mit hoher Messgenauigkeit reduziert ist. Außerdem soll die Messeinrichtung mechanisch und thermisch stabil ausgebildet sein.

Diese Aufgabe wird bei der eingangs genannten Messeinrichtung zur Messung einer Distanz zu einem Zielobjekt erfindungsgemäß durch die Merkmale des unabhängigen Anspruchs 1 gelöst. Vorteilhafte Weiterbildungen sind in den abhängigen Ansprüchen angegeben.

Erfindungsgemäß ist vorgesehen, dass der Optikträger einen dritten Wafer zur Aufnahme der Strahlformungsoptik aufweist, wobei der erste und zweite Wafer über mindestens einen ersten Abstandhalter miteinander verbunden sind und der zweite und dritte Wafer über mindestens einen zweiten Abstandhalter miteinander verbunden sind. Als Wafer werden in der Mikroelektronik und Mikrosystemtechnik kreisrunde oder quadratische, etwa ein Millimeter dicke Scheiben bezeichnet. Sie werden aus ein- oder polykristallinen Halbleiter-Rohlingen hergestellt und dienen als Substrat für elektronische Bauelemente, unter anderem für integrierte Schaltkreise, mikromechanische Bauelemente oder photoelektrische Beschichtungen. Als Materialien werden unter anderem monokristallines Silicium, Silicium-Carbid, Gallium-Arsenid und Indium-Phosphid verwendet. In der Mikrosystemtechnik werden auch Glaswafer, beispielsweise aus Borosilicatglas, verwendet.

Die Verwendung von Wafern zur Aufnahme der elektro-optischen Komponenten und der Strahlteilungs- oder Strahlformungsoptik einer Messeinrichtung hat den Vorteil, dass die Herstellung von optischen Elementen in Wafern und das Befestigen von verschiedensten Komponenten bekannt und daher kostengünstig zu realisieren ist. Außerdem weist eine Messeinrichtung, die aus übereinander gestapelten Wafern besteht, eine hohe mechanische und thermische Stabilität auf. Bei der Verwendung von Wafern als Optikträger können optische Elemente entweder separat gefertigt und mit dem Wafer verbunden werden oder die optischen Elemente werden durch lithographische Verfahren in den Wafer integriert.

Bevorzugt ist eine Streublende zum Erzeugen eines Referenzstrahls vorgesehen, wobei die Streublende auf dem zweiten Wafer oder einem weiteren Wafer, der sich im Strahlengang des Sendestrahls hinter dem zweiten Wafer befindet, angeordnet ist.

Die optischen Elemente der Messeinrichtung können als separate optische Elemente ausgebildet sein, die mit den Wafern verbunden werden. Die separate Ausbildung bietet sich für optische Elemente an, die sich nicht oder nur mit hohem Aufwand mittels lithographischer Verfahren erzeugen lassen.

Alternativ können die optischen Elemente der Messeinrichtung in die Wafer integriert sein. Die Integration der optischen Elemente in den Wafer hat den Vorteil, dass Optikträger und optisches Element aus demselben Material hergestellt sind. Der Wafer verändert sich unter Temperatureinfluss gleichmäßig, es gibt keine Bereiche im Wafer, die sich aufgrund verschiedener Materialeigenschaften temperaturabhängig unterschiedlich verändern. Durch die Integration der optischen Elemente in den Wafer wird die Stabilität der Messeinrichtung erhöht.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein Laserdistanzmesssystem mit einer Messeinrichtung in einer dreidimensionalen Darstellung;
- FIG. 2: eine Ausführungsform einer erfindungsgemäßen Messeinrichtung mit einer koaxialen Anordnung der Sende- und Empfangseinrichtungen;

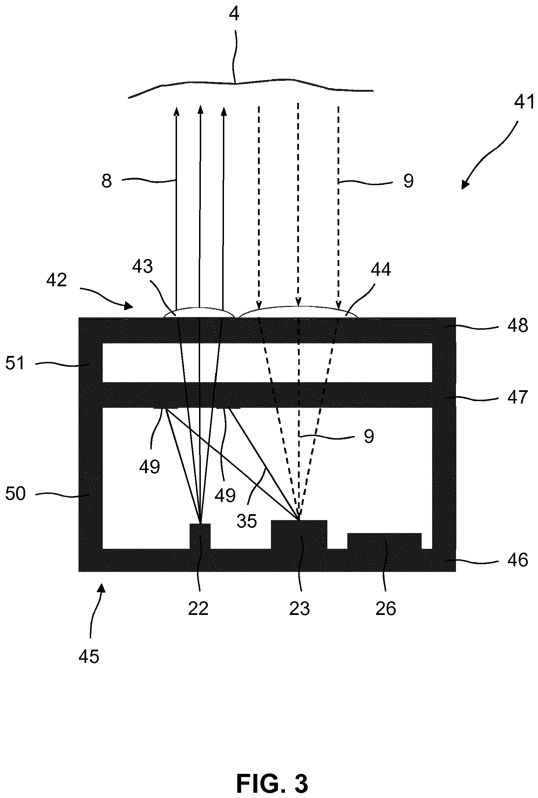

- FIG. 3: eine Messeinrichtung mit einer paraaxialen Anordnung der Sende- und Empfangseinrichtungen.

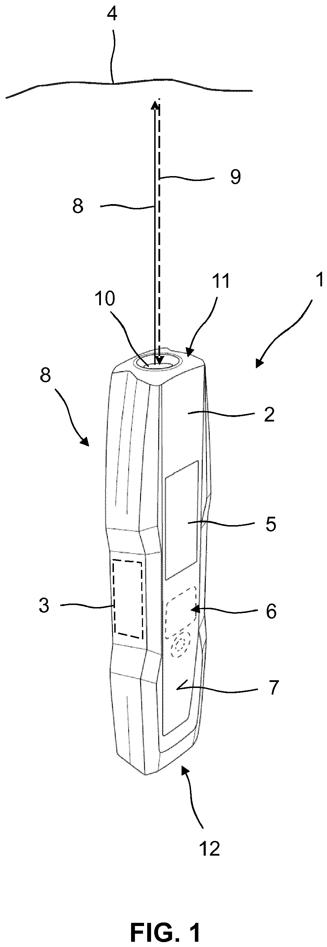

**Fig. 1** zeigt ein Laserdistanzmesssystem **1** in einer dreidimensionalen Darstellung. Das Laserdistanzmesssystem 1 umfasst ein Gehäuse **2,** eine Messeinrichtung **3,** mit der die Distanz zu einem Zielobjekt **4** messbar ist, eine Anzeigeeinrichtung **5** zur Anzeige der gemessenen Distanz und eine Bedieneinrichtung **6** zum Starten einer Distanzmessung und zum Einstellen des Laserdistanzmesssystems 1. Die Messeinrichtung 3 ist im Inneren des Gehäuses 2 angeordnet und die Anzeige- und Bedieneinrichtungen 5, 6 sind in eine Oberseite **7** des Gehäuses 2 eingebettet.

Die Messeinrichtung 3 sendet einen Sendestrahl **8** aus, der auf das Zielobjekt 4 gerichtet ist. Ein vom Zielobjekt 4 reflektierter und/oder gestreuter Empfangsstrahl **9** wird von der Messeinrichtung 3 detektiert. Die Distanz zum Zielobjekt 4 wird aus der Zeitdifferenz zwischen dem Empfangsstrahl 9 und einem aus dem Sendestrahl 8 ausgekoppelten Referenzstrahl berechnet. Der Austritt des Sendestrahls 8 aus dem Gehäuse 2 und der Eintritt des Empfangsstrahls 9 in das Gehäuse 2 erfolgt über ein Austrittsfenster **10,** das in eine Vorderseite **11** des Gehäuses 2 eingebettet ist. Die Distanzmessung zum Zielobjekt 4 erfolgt in Bezug auf eine am Laserdistanzmesssystem 1 befindliche Referenzmarke. Bei dem Laserdistanzmesssystem 1 werden die Vorderseite 11 oder eine der Vorderseite 11 gegen überliegende Hinterseite **12** als Referenzmarken verwendet. Die Umschaltung zwischen den Referenzmarken erfolgt über eine Umschalteinrichtung.

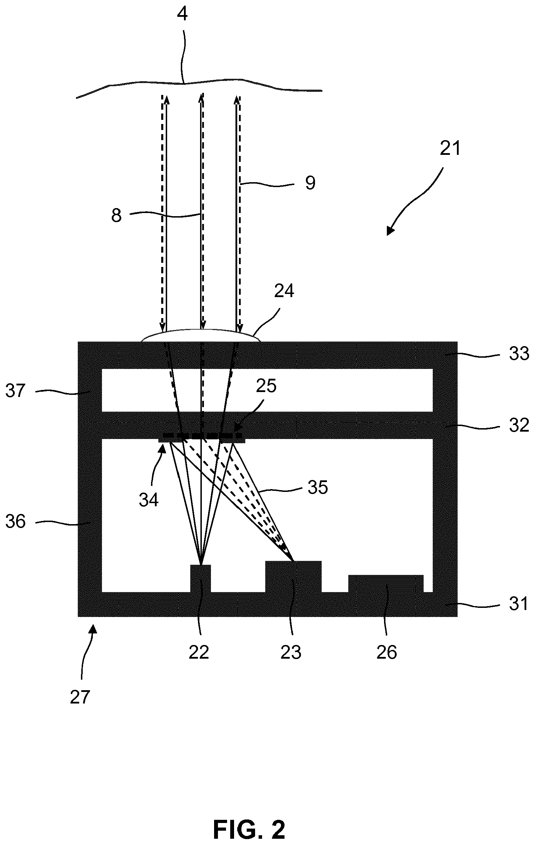

**FIG. 2** zeigt eine Ausführungsform einer erfindungsgemäßen Messeinrichtung **21** zur Messung einer Distanz zum Zielobjekt 4 mit einer koaxialen Anordnung der Sende- und Empfangseinrichtungen in einer schematischen Darstellung.

Die Messeinrichtung 21 umfasst eine als Strahlquelle ausgebildete elektro-optische Komponente **22,** eine als Detektor ausgebildete weitere elektro-optische Komponente **23,** eine Strahlformungsoptik **24,** eine Strahlteilungsoptik **25,** eine Steuer- und Auswerteeinrichtung **26** und einen Optikträger **27.** Die Strahlquelle 22 ist als Laserdiode ausgebildet, die einen Laserstrahl im sichtbaren Spektrum, beispielsweise einen roten Laserstrahl mit einer Wellenlänge von 635 nm oder einen grünen Laserstrahl mit einer Wellenlänge von 532 nm oder 555 nm, erzeugt. Der Detektor 23 ist als Fotodiode ausgebildet und die Eigenschaften der Fotodiode 23 sind an die Laserdiode 22 angepasst. Die Steuer- und Auswerteeinrichtung 26 ist mit der Strahlquelle 22 und dem Detektor 23 verbunden und bestimmt mit Hilfe eines Auswertemoduls aus einer Zeitdifferenz zwischen einem Referenzstrahl und dem vom Detektor 23 erfassten Empfangsstrahl 10 die Distanz zum Zielobjekt 4. Die Strahlformungsoptik 24 ist als Linse ausgebildet, die sowohl den Sendestrahl 8 als auch den reflektierten und/oder gestreuten Empfangsstrahl 9 formt. Aufgrund der koaxialen Anordnung der Sende- und Empfangseinrichtungen ist nur eine einzelne Strahlformungsoptik 24 erforderlich.

Mit Hilfe der Strahlteilungsoptik 25 werden der von der Strahlquelle 22 kommende Sendestrahl 8 und der reflektierte und/oder gestreute Empfangsstrahl 9 räumlich getrennt. Die Strahlteilungsoptik 25 ist im Strahlengang des Sendestrahls 8 zwischen der Strahlquelle 22 und der Strahlformungsoptik 24 und im Strahlengang des Empfangsstrahls 9 zwischen der Strahlformungsoptik 24 und dem Detektor 23 angeordnet. Die Strahlteilungsoptik 25 sorgt dafür, dass der Sendestrahl 8 und der Empfangsstrahl 9 voneinander getrennt werden.

Der Optikträger 27 dient dazu, sämtliche optischen, elektro-optischen und elektronischen Komponenten 22-26 der Messeinrichtung 21 aufzunehmen. Der Optikträger 27 weist einen ersten Wafer **31** für die elektro-optischen Komponenten 22, 23, einen zweiten Wafer **32** für die Strahlteilungsoptik 25 und einen dritten Wafer **33** für die Strahlformungsoptik 24 auf. Die Strahlteilungsoptik 25 kann alternativ in den dritten Wafer 33 integriert werden oder in die Austrittsfläche der Strahlformungsoptik 24 integriert werden oder als separates optisches Element am zweiten oder dritten Wafer 32, 33 befestigt werden. Die Strahlteilungsoptik 25 ist beispielsweise als Polarisationsstrahlteiler ausgebildet.

Neben den elektro-optischen Komponenten 22, 23 ist die Steuer- und Auswerteeinrichtung 26 auf dem ersten Wafer 31 angeordnet. Die Steuer- und Auswerteeinrichtung 26 kann auch auf einem anderen Wafer als dem ersten Wafer 31 vorgesehen sein. Da die Steuer- und Auswerteeinrichtung 26 aber mit den elektro-optischen Komponenten 22, 23 verbunden werden muss, bietet die Anordnung auf dem ersten Wafer 31 den Vorteil, dass die Verbindungsleitungen in den ersten Wafer 31 integriert werden können.

Der zweite Wafer 32 weist neben der Strahlteilungsoptik 25 eine Streublende **34** auf, die einen Referenzstrahl **35** aus dem Sendestrahl 8 auskoppelt. Die Steuer- und Auswerteeinrichtung 26 bestimmt aus der Zeitdifferenz zwischen dem Auftreffen des Referenzstrahls 35 und dem Auftreffen des Empfangsstrahls 9 auf den Detektor 23 die Distanz zum Zielobjekt 4.

Um einen einwandfreien Messbetrieb mit der Messeinrichtung 21 sicherzustellen, müssen die verschiedenen Komponenten 22-26 der Messeinrichtung 21 zueinander justiert und in der justierten Position fixiert werden. Dazu werden die Wafer 31, 32, 33 mit den Komponenten 22-26 justiert und anschließend über Abstandhalter im justierten Zustand fixiert. Der erste und zweite Wafer 31, 32 werden über einen ersten Abstandhalter **36** und der zweite und dritte Wafer 32, 33 über einen zweiten Abstandhalter **37** zueinander ausgerichtet und anschließend fixiert.

Die koaxiale Messeinrichtung 21 kann alternativ ohne die Strahlformungsoptik 24 betrieben werden oder es wird eine Strahlformungsoptik eingesetzt, die nicht im Optikträger 27 aufgenommen wird. Dann wird die räumlich getrennte Strahlformungsoptik mit dem Optikträger 27 zusammen betrieben. Diese Anordnung wird bevorzugt, falls ein großer Durchmesser des Sendestrahls nötig ist, was eine größere Strahlformungsoptik verlangt, um die zu messende Distanz zu vergrößern.

**FIG**. **3** zeigt eine Messeinrichtung **41** zur Messung einer Distanz zum Zielobjekt 4 mit einer paraaxialen Anordnung der Sende- und Empfangseinrichtungen in einer schematischen Darstellung.

Die Messeinrichtung 41 umfasst wie die Messeinrichtung 21 die Strahlquelle 22, den Detektor 23 und die Steuer- und Auswerteeinrichtung 26. Da die Strahlquelle 22 und der Detektor 23 para-axial angeordnet sind, weist die Messeinrichtung 41 keine Strahlteilungsoptik auf. Die Messeinrichtung 41 unterscheidet sich im Aufbau der Strahlformungsoptik 42 von der Messeinrichtung 21. Die Strahlformungsoptik 42 besteht aus einer ersten Strahlformungsoptik **43** zur Formung des Sendestrahls 8 und einer zweiten Strahlformungsoptik **44** zur Formung des Empfangsstrahls 9.

Die Messeinrichtung 41 weist einen Optikträger **45** auf, der die Komponenten 22, 23, 26, 43, 44 der Messeinrichtung 41 aufnimmt. Der Optikträger 45 weist einen ersten Wafer **46** für die elektro-optischen Komponenten 22, 23 und die Steuer- und Auswerteeinrichtung 26 auf und einen zweiten Wafer **47** für die erste und zweite Strahlformungsoptik 42, 44.

Der Optikträger 45 weist einen dritten Wafer **48** für eine Streublende **49** auf, mit der der Referenzstrahl 35 aus dem Sendestrahl 8 ausgekoppelt wird. Die Streublende 49 kann alternativ auf dem zweiten Wafer 47 angeordnet sein oder für den Fall, dass weitere Wafer zur Aufnahme von Komponenten der Messeinrichtung 41 vorgesehen sind, auf einem dieser Wafer. Als Streublende 49 eignet sich jedes Element, das eine Streuung des auftreffenden Sendestrahls 8 erzeugt. Die Streublende kann als separates optisches Element auf dem Wafer befestigt der mittels lithografischer Verfahren in dem Wafer hergestellt werden.

Analog zu den Wafern 31, 32, 33 des Optikträgers 27 werden die Wafer 46, 47, 48 über Abstandhalter **50, 51** in Position gehalten. Die Abstandhalter 50, 51 werden beispielsweise mit den Wafer verklebt. Der erste und dritte Wafer 46, 48 werden über den ersten Abstandhalter 50 und der zweite und dritte Wafer 47, 48 über den zweiten Abstandhalter 51 miteinander verbunden.

## Patentansprüche

1. Messeinrichtung (3; 21) zur Messung einer Distanz zu einem Zielobjekt (4), aufweisend eine Strahlquelle (22), die als elektro-optische Komponente ausgebildet ist und einen Sendestrahl (8) aussendet,
einen Detektor (23), der als weitere elektro-optische Komponente ausgebildet ist und einen vom Zielobjekt (4) reflektierten und/oder gestreuten Empfangsstrahl (9) empfängt, eine Strahlteilungsoptik (25) zum Umlenken des Sende- und/oder Empfangsstrahls (8, 9) und eine Strahlformungsoptik (24) zum Formen des Sende- und/oder Empfangsstrahls (8, 9), wobei die Strahlteilungsoptik (25) im Strahlengang des Sendestrahls (8) zwischen der Strahlquelle (22) und der Strahlformungsoptik (24) und im Strahlengang des Empfangsstrahls (9) zwischen der Strahlformungsoptik (24) und dem Detektor (23) angeordnet ist, und
einen Optikträger (27) zur Aufnahme der elektro-optischen Komponenten (22, 23) und zur Aufnahme der Strahlteilungsoptik (25) und der Strahlformungsoptik (24), wobei der Optikträger (27) einen ersten Wafer (31) zur Aufnahme der elektro-optischen Komponenten (22, 23) und einen zweiten Wafer (32) zur Aufnahme der Strahlteilungsoptik (25) aufweist,
**dadurch gekennzeichnet, dass**
der Optikträger (27) einen dritten Wafer (33) zur Aufnahme der Strahlformungsoptik (24) aufweist, wobei der erste und zweite Wafer (31, 32) über mindestens einen ersten Abstandhalter (36) miteinander verbunden sind und der zweite und dritte Wafer (32, 33) über mindestens einen zweiten Abstandhalter (37) miteinander verbunden sind.

2. Messeinrichtung nach Anspruch 1, **dadurch gekennzeichnet, dass** eine Streublende (34) zum Erzeugen eines Referenzstrahls (35) vorgesehen ist, wobei die Streublende (34) auf dem zweiten Wafer (32) oder einem weiteren Wafer (33), der sich im Strahlengang des Sendestrahls (8) hinter dem zweiten Wafer (32) befindet, angeordnet ist.

3. Messeinrichtung nach einem der Ansprüche 1 bis 2, **dadurch gekennzeichnet, dass** die optischen Elemente als separate optische Elemente (24, 34) ausgebildet sind.

4. Messeinrichtung nach einem der Ansprüche 1 bis 2, **dadurch gekennzeichnet, dass** die optischen Elemente (25) in die Wafer (32) integriert sind.

## Claims

1. Measuring device (3; 21) for measuring a distance to a target object (4), comprising
a beam source (22) which is configured as an electro-optical component and which emits a transmission beam (8),
a detector (23) which is configured as a further electro-optical component and which receives a reception beam (9) reflected and/or scattered by the target object (4),
beam-splitting optics (25) for deflecting the transmission and/or reception beam (8, 9), and beam-shaping optics (24) for shaping the transmission and/or reception beam (8, 9), wherein the beam-splitting optics (25) are arranged in the beam path of the transmission beam (8) between the beam source (22) and the beam-shaping optics (24) and in the beam path of the reception beam (9) between the beam-shaping optics (24) and the detector (23), and
an optics carrier (27) for receiving the electro-optical components (22, 23) and for receiving the beam-splitting optics (25) and the beam-shaping optics (24), the optics carrier (27) having a first wafer (31) for receiving the electro-optical components (22, 23) and a second wafer (32) for receiving the beam-splitting optics (25),
**characterised in that**
the optics carrier (27) has a third wafer (33) for receiving the beam-shaping optics (24), the first and second wafers (31, 32) being connected to one another by means of at least one first spacer (36), and the second and third wafers (32, 33) being connected to one another by means of at least one second spacer (37).

2. Measuring device according to Claim 1, **characterised in that** a scattering aperture (34) for producing a reference beam (35) is provided, the scattering aperture (34) being arranged on the second wafer (32) or on a further wafer (33) arranged in the beam path of the transmission beam (8) behind the second wafer (32).

3. Measuring device according to either of Claims 1 and 2, **characterised in that** the optical elements are configured as separate optical elements (24, 34).

4. Measuring device according to either of Claims 1 and 2, **characterised in that** the optical elements (25) are integrated in the wafers (32).

## Revendications

1. Dispositif de mesure (3 ; 21) destiné à mesurer une distance par rapport à un objet cible (4), comportant une source de rayonnement (22) qui est conçue comme un composant électro-optique et qui émet un faisceau d'émission (8),
un détecteur (23) qui est conçu comme un composant électro-optique supplémentaire et qui reçoit un faisceau de réception (9) réfléchi et/ou dispersé par l'objet cible (4),
un composant optique de séparation de faisceau (25) pour dévier le faisceau d'émission et/ou de réception (8, 9) et un composant optique de conformation de faisceau (24) pour conformer le faisceau d'émission et/ou de réception (8, 9), dans lequel le composant optique de séparation de faisceau (25) est agencé dans le trajet de faisceau du faisceau d'émission (8) entre la source de rayonnement (22) et le composant optique de conformation de faisceau (24), et dans le trajet de faisceau du faisceau de réception (9) entre le composant optique de conformation de faisceau (24) et le détecteur (23), et
un support de composants optiques (27) pour recevoir les composants électro-optiques (22, 23) et pour recevoir le composant optique de séparation de faisceau (25) et le composant optique de conformation de faisceau (24), dans lequel le support de composants optiques (27) comporte une première plaquette (31) pour recevoir les composants électro-optiques (22, 23) et une deuxième plaquette (32) pour recevoir le composant optique de séparation de faisceau (25),
**caractérisé en ce que**
le support de composants optiques (27) comporte une troisième plaquette (33) pour recevoir le composant optique de conformation de faisceau (24), dans lequel les première et deuxième plaquettes (31, 32) sont reliées l'une à l'autre par l'intermédiaire d'au moins une première entretoise d'écartement (36) et les deuxième et troisième plaquettes (32, 33) sont reliées l'une à l'autre par l'intermédiaire d'au moins une seconde entretoise d'écartement (37).

2. Dispositif de mesure selon la revendication 1, **caractérisé en ce qu'**un diaphragme de dispersion (34) est prévu pour générer un faisceau de référence (35), dans lequel le diaphragme de dispersion (34) est agencé sur la deuxième plaquette (32) ou sur une plaquette supplémentaire (33) qui se situe derrière la deuxième plaquette (32) dans le trajet de faisceau du faisceau d'émission (8).

3. Dispositif de mesure selon l'une des revendications 1 à 2, **caractérisé en ce que** les éléments optiques sont conçus comme des éléments optiques séparés (24, 34).

4. Dispositif de mesure selon l'une des revendications 1 à 2, **caractérisé en ce que** les éléments optiques (25) sont intégrés dans la plaquette (32).
